(19) **Europäisches Patentamt**

**European Patent Office**

**Office européen des brevets**

(11) **EP 1 465 173 B1**

(12) **EUROPEAN PATENT SPECIFICATION**

(45) Date of publication and mention
of the grant of the patent:
**30.08.2006 Bulletin 2006/35**

(51) Int Cl.:
***G11B 7/24*** (2006.01)

(21) Application number: **04007726.5**

(22) Date of filing: **30.03.2004**

(54) **Optical recording material, optical recording medium and manufacturing method thereof, optical recording method and reproduction method**

Material für optische Aufzeichnung, Träger für optische Aufzeichnung und Verfahren zu dessen Herstellung, sowie Verfahren für optische Aufzeichnung und Reproduktionsverfahren

Matériau pour l'enregistrement optique, support pour l'enregistrement optique et procédé pour sa fabrication, méthode d'enregistrement optique et méthode de reproduction

(84) Designated Contracting States:
**DE FR GB**

(30) Priority: **31.03.2003 JP 2003093937**

(43) Date of publication of application:
**06.10.2004 Bulletin 2004/41**

(73) Proprietor: **TDK Corporation**
**Tokyo 103-8272 (JP)**

(72) Inventor: **Mizushima, Tetsuro**
**Tokyo 103-8272 (JP)**

(74) Representative: **Grünecker, Kinkeldey,**
**Stockmair & Schwanhäusser**
**Anwaltssozietät**
**Maximilianstrasse 58**
**80538 München (DE)**

(56) References cited:
**US-A- 4 214 249**

• **PATENT ABSTRACTS OF JAPAN vol. 1999, no. 03, 31 March 1999 (1999-03-31) & JP 10 315622 A (KAO CORP), 2 December 1998 (1998-12-02)**

**Description**

BACKGROUND OF THE INVENTION

Field of the Invention

The present invention relates to an optical recording material, an optical recording medium and manufacturing method thereof, an optical recording method and a reproduction method.

Related Background Art

Recording media for recording by irradiation of light are generally optical recording media wherein information is recorded by deformation, magnetic domain changes or phase changes produced by laser irradiation of the recording layer, and such media are widely employed as CDs and DVDs. Optical recording media of these types which have been implemented include write-once read-multiple recording media employing organic dye and the like, and magneto-optical recording media employing rare earth-transition metal amorphous magnetic films.
Achieving larger capacities of recording media has been a further goal with the increasing trend toward advanced information in recent years, but the optical recording materials mentioned above have been associated with several limitations. Specifically, with conventional optical recording materials the recording is accomplished with the laser focused using lenses. Since the spot diameter of the focus usually cannot be smaller than 1/2 of the wavelength of the irradiated light, this has constituted a limit for the volume of data that can be recorded in a given area (recording density), and therefore the capacities of the recording media overall have been restricted.
In recent years, chalcogenide glass containing chalcogen elements such as S, Se and Te has attracted attention as a new material for optical recording media. Chalcogenide glass has a property differing from conventional glass, whereby it simultaneously exhibits glass properties and semiconductor properties, and research on its structure and applications is being actively pursued (for example, Tanaka, K., "Ceramics", 2001, Vol.36, No.2, p.80-83).
When light is irradiated into a two-phase system comprising chalcogenide glass and a metal, a light doping phenomenon wherein the metal is ionized and is abnormally diffused (doped) in the glass occurs as a characteristic light-induced phenomenon in the chalcogenide glass. Reported examples of applications of chalcogenide glass utilizing this light doping phenomenon include photoresists, gray scale masks and the like (for example, Japanese Patent Application Laid-Open No. 7-74087 and Japanese Patent Application (International application) Laid-Open No. 2000-514933).
Examples of applying this chalcogenide glass light doping phenomenon to optical recording media have also been reported (for example, Japanese Patent Application Laid-Open No. 10-315622). In this particular case, the optical recording medium is indicated as having a metal layer and a chalcogenide glass layer laminated on a substrate, wherein irradiation of light produces a light doping phenomenon and records a signal based on the difference in reflectivity with respect to the non-irradiated sections.

SUMMARY OF THE INVENTION

However, since the optical recording medium described in Japanese Patent Application Laid-Open No. 10-315622 produces light doping at the interface between the metal layer and the chalcogenide glass layer and recording is accomplished based on the difference in reflectivity during irradiation of reproduction light, it is difficult to achieve three-dimensional recording in the direction of depth of the recording layer.
The present invention has been accomplished in light of the circumstances described above, and one of its objects is to provide an optical recording material which employs chalcogenide glass and which can achieve high capacity. It is another object of the invention to provide an optical recording medium employing the optical recording material, a manufacturing method thereof, an optical recording method and a reproduction method.
In order to achieve the aforementioned object, the present invention provides an optical recording material which allows recording of information by irradiation of light, comprising at least chalcogenide glass and metal particles which are dispersed in the chalcogenide glass and are made of a metal which is diffusible in the chalcogenide glass by irradiation of the light.
When the aforementioned optical recording material is irradiated with light, the dispersed metal particles are diffused in the chalcogenide glass by light doping. Here, dispersion refers to a state in which numerous metal atoms are distributed throughout the chalcogenide glass in the form of aggregated particles, while diffusion refers to a state in which essentially atomic units of the metal are distributed throughout the chalcogenide glass. Light irradiation causes atomic units such as ions to form from the metal particles and be diffused throughout the chalcogenide glass, thereby reducing (altering) the reflection and absorption of light by the metal particles produced before the light irradiation, and resulting in changes in the optical properties such as enhanced light transmittance at the light-irradiated sites. This creates a difference in optical properties between the light-irradiated sections and non-irradiated sections, thereby allowing recording to be accomplished based on the difference in optical properties.

According to this type of optical recording material, the degree of diffusion of the metal varies with the intensity of irradiated light, and therefore when the irradiated light has a specific light/dark pattern, the changes in optical properties occur in correspondence to the light/dark pattern. Thus, the optical recording material of the invention may be used as a recording material for volume holograms, which has not been an easily suitable application for conventional optical recording materials employing chalcogenide glass, and the recording method also permits multiplex recording in the same volume as well as multiplex recording based on varying the recording position in the direction of depth.

The metal of the metal particles is preferably at least one metal selected from the group consisting of Ag, Au and Cu. Because these metals have an excellent light doping property in chalcogenide glass, diffusion is efficiently achieved by light irradiation and the resulting large difference in transmittance between the light-irradiated sections and non-irradiated sections allows for excellent recording precision.

The particle size of the metal is preferably no greater than 1/20 of the wavelength of the irradiated light. An optical recording material having a metal of this particle size dispersed therein restricts light absorption, reflection and scattering by the metal particles upon irradiation by the recording light, thereby allowing a sufficient amount of light to reach sites distant from the light irradiation side and making uniform diffusion of the metal possible.

In the optical recording material of the invention, the content of the dispersed metal particles is preferably at least 0.1 vol% and less than 2 vol% based on the total volume of the optical recording material.

The chalcogenide glass preferably contains Ge and S. Ge-S based chalcogenide glass produces a particularly satisfactory light doping reaction, and because the transmitting region reaches to short wavelengths, an optical recording material utilizing such chalcogenide glass is capable of shorter wavelength recording and is suitable for high density recording volumes based on multilayer recording or multiplex recording.

An optical recording medium according to the present invention is provided with at least a substrate material and a recording layer (optical recording layer) comprising an optical recording material of the invention formed on the substrate material. This type of optical recording medium which employs the aforementioned optical recording material of the invention is suitable for multilayer recording or multiplex recording such as hologram recording. For satisfactory multilayer or multiplex recording, the thickness of the recording layer of the optical recording medium is preferably at least 2 times the wavelength of the irradiated light.

The optical recording medium may be fabricated by a manufacturing method comprising a step of simultaneously or alternately forming films of chalcogenide glass and of a metal which is diffusible in chalcogenide glass by irradiation of light, on a substrate material to form a recording layer having metal particles made of the metal dispersed in the chalcogenide glass on the substrate material.

The optical recording method of the invention comprises a recording step wherein the metal is diffused in the chalcogenide glass by irradiating light on the recording layer of the aforementioned optical recording medium of the invention. The light used is preferably light with a wavelength of at least 0.7X and less than 1.0X, where X is the wavelength of the short wavelength end of the transmitting region of the chalcogenide glass. The transmitting region referred to here is the non-absorbed wavelength region, and the short wavelength end of the transmitting region is the wavelength at which absorption begins.

Since light of a slightly shorter wavelength than the short wavelength end of the transmitting region has a low absorptance in the chalcogenide glass of the recording layer of the optical recording medium, an effect is exhibited whereby the light easily reaches the metal particles dispersed in the chalcogenide glass while not completely penetrating the chalcogenide glass, and therefore that light produces a state of photoexcitation in the chalcogenide glass.

This method may also be applied for multilayer recording. In this case, recording is accomplished by varying the focus position of the recording light in the direction of depth of the recording layer to diffuse the metal particles in the chalcogenide glass at different depthwise positions.

The optical recording medium of the invention can also be applied as a recording medium for holograms. In this case, it is possible to obtain a hologram-recorded optical recording medium by a method comprising a hologram recording step wherein the metal is diffused in the chalcogenide glass by irradiating recording light composed of a signal beam and a reference beam onto the recording layer of an optical recording medium according to the invention.

For hologram recording as well, the signal beam and reference beam are preferably both composed of light with a wavelength of at least 0.7X and less than 1.0X, where X is the wavelength of the short wavelength end of the transmitting region of the chalcogenide glass, as explained above.

Information recorded in the optical recording medium in the manner described above may be read by a reproduction method comprising a step of irradiating reproduction light with a wavelength above that of the short wavelength end of the transmitting region of the chalcogenide glass onto the recording layer of the optical recording medium described above.

BRIEF DESCRIPTION OF THE DRAWINGS

Fig. 1 is a schematic cross-sectional view of an optical recording material according to the invention.

Fig. 2 is a graph showing the change in normalized absorptance with respect to the change in wavelength of irradiated light, for the optical recording medium sample of Reference Example 1.

Fig. 3 is a graph showing the change in transmittance with respect to change in light irradiation dose of irradiated light, for the optical recording medium samples of Examples 1 and 2.

DESCRIPTION OF THE PREFERRED EMBODIMENT

Preferred embodiments of the invention will now be explained in detail with reference to the accompanying drawings. Similar elements will be indicated by like reference numerals and will be explained only once.

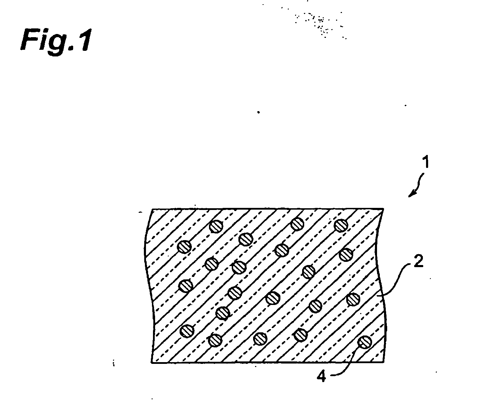

Fig. 1 is a schematic cross-sectional view of an optical recording material according to the invention. The optical recording material 1 has a construction wherein metal particles 4 are dispersed in chalcogenide glass 2. The optical recording material 1 having this construction has a property such that irradiation of light causes diffusion of the metal particles 4 in the chalcogenide glass (hereinafter, the phenomenon of metal particle diffusion by light irradiation will be referred to as "light doping"). The light doping produces variation in the light transmittance at the light-irradiated sections of the optical recording material 1, and recording can therefore be effected in the optical recording material 1 by utilizing the difference in light transmittance between the light-irradiated sections and non-irradiated sections resulting from this light transmittance variation.

The mechanism by which the metal particles 4 become diffused in the chalcogenide glass by light irradiation is not fully understood, but it is believed to occur in the following manner. First, light irradiated on the chalcogenide glass 2 excites the chalcogenide glass 2, generating positive hole/electron pairs. Due to the property whereby the positive holes in the chalcogenide glass 2 readily migrate while the electrons tend to accumulate, the positive holes generated by light irradiation migrate dispersively around the light-irradiated sections, while the electrons accumulate near the light-irradiated sections. Presumably, the metal of the metal particles 4 diffuses in the form of cations at the light-irradiated sections (light doping) in order to compensate for the separation of charges created by the migration of positive holes and accumulation of electrons. However, the mechanism is not limited to this theory.

The chalcogenide glass 2 is composed of a non-oxide amorphous material containing a chalcogen element such as S, Te or Se, and it is not particularly restricted so long as it is capable of light doping of metal particles 4. Examples of amorphous materials containing chalcogen elements include Ge-S based glass, As-S based glass, As-Se based glass and As-Se-Ge based glass, among which Ge-S based glass is preferred. When Ge-S based glass is used as the chalcogenide glass 2, the compositional ratio of Ge and S in the glass may be varied as desired depending on the wavelength of the light to be irradiated, but chalcogenide glass having the compositional ratio $GeS_2$ is preferred in most cases.

The metal particles 4 are composed of a metal having the property of being light doped in the chalcogenide glass 2 by irradiation of light. Examples of metals having such a property include Al, Au, Cu, Cr, Ni, Pt, Sn, In, Pd, Ti, Fe, Ta, W, Zn and Ag, which may be selected as appropriate for the chalcogenide glass 2 used. Among these, Ag, Au and Cu have properties which facilitate light doping, and Ag is particularly preferred because it produces notable light doping.

The particle size of the metal particles 4 comprising aggregates of such metals is preferably no greater than 1/20 and more preferably no greater than 1/40 of the wavelength of the irradiated light. If the particle size of the metal particles 4 exceeds 1/20, a greater percentage of the irradiated light will be reflected, absorbed or scattered by the metal particles 4, thereby reducing the light transmittance of the optical recording material 1 and tending to impede adequate light doping in the direction of thickness of the optical recording material.

The content of the metal particles 4 dispersed in the chalcogenide glass 2 in the optical recording material 1 is preferably at least 0.1 vol% and less than 2 vol%, and more preferably at least 0.1 vol% and less than 1.0 vol%, based on the total volume of the optical recording material. If the content of metal particles 4 is less than 0.1 vol% the change in transmittance by light doping will be insufficient and the recording precision will thus tend to be reduced, whereas if it is 2 vol% or greater the light transmittance of the optical recording material 1 is reduced, making it difficult to achieve adequate light doping.

The optical recording medium of the invention has a substrate material and a recording layer comprising an optical recording material of the invention formed on the substrate material. The substrate material used may be glass, metal, a resin material or the like. Such substrate materials are preferably transparent to the light used for recording or reproduction. Using a substrate material which is transparent to the recording or reproduction light will allow optical recording from either the substrate material side or the recording layer side. A protective layer which allows transmission of the recording or reproduction light may also be formed on the recording layer to protect the recording layer.

The recording layer of the optical recording medium preferably has a thickness which is at least twice the wavelength of the light used for recording. A recording layer with this size of thickness is suitable for multiplex recording whereby recording is performed three-dimensionally in the direction of depth.

An optical recording medium of this type may be fabricated by forming a recording layer made of an optical recording material on a substrate material, and the recording layer may be formed on the substrate material by, for example, vacuum deposition. Vacuum deposition is carried out by simultaneously or alternately forming films of the chalcogenide glass material and the metal to be dispersed in the chalcogenide glass. In the case of simultaneous vapor deposition, a chalcogenide glass ingot and a metal ingot are introduced as vapor deposition sources into the same vapor deposition apparatus, and an electron beam or the like is used for simultaneous vaporization of both. For alternating formation, each ingot is introduced alternately into the vapor deposition apparatus, or else each ingot is introduced into a different vapor deposition apparatus and vaporized and the substrate material to be vapor deposited is introduced alternately into each vapor deposition apparatus. In addition to these methods, the films may be formed by PVD (physical vapor phase deposition) such as sputtering, or by CVD (chemical vapor phase deposition).

The optical recording material of the invention and the optical recording medium employing it allow recording of information to be accomplished by irradiation of light. The recording layer of the optical recording medium is irradiated with light to diffuse the metal in the optical recording material 1 of the recording layer into the chalcogenide glass 2 (recording step). Information is thus recorded by this recording method.

The light irradiated in this case is preferably light of a slightly shorter wavelength than the short wavelength end of the transmitting region. At this wavelength, the absorptance of the chalcogenide glass is larger than zero, and less than 100% at the thickness to which the recording layer is formed. Specifically as regards the wavelength dependency of the absorptance of the chalcogenide glass, a wavelength with an absorptance of greater than zero and less than 100% is preferred, and a wavelength near the shortest wavelength at which the absorptance is zero is preferred.

Ordinary chalcogenide glass tends to absorb light of shorter wavelengths (ultraviolet light, etc.) while transmitting light of longer wavelengths (infrared light, etc.). In light of this tendency, therefore, if the wavelength of irradiated light is gradually lengthened the light absorption will cease at a specific wavelength. This wavelength corresponds to the short wavelength end of the transmitting region.

The wavelength of light to be irradiated is preferably a wavelength of at least 0.7X and less than 1.0X and more preferably at least 0.8X and less than 1.0X, where X is the wavelength of the short wavelength end of the transmitting region. If the wavelength of the light to be irradiated is less than 0.7X, the chalcogenide glass will tend to absorb more of the light, which can prevent adequate light doping, while if it is 1.0X or greater, photoexcitation of the chalcogenide glass may fail to occur, thereby impeding adequate light doping. More specifically, for example when using Ge-S based glass composed mainly of $GeS_2$ as the chalcogenide glass, the short wavelength end of the transmitting region is about 550 nm, although this differs depending on the fabrication method and the amount of S defects. It will have a transmittance of zero for light of less than 350 nm. Thus, the wavelength of light used is preferably at least 350 nm and less than 550 nm, more preferably at least 385 nm and less than 550 nm, and more preferably at least 440 nm and less than 550 nm.

The optical recording medium of the invention is suitable as a hologram recording medium for recording of holograms. In this case, the recording layer of the optical recording medium of the invention is irradiated with recording light composed of a signal beam and reference beam to effect hologram recording by diffusing the metal throughout the chalcogenide glass 2 (hologram recording step). In this manner of hologram recording, the degree of light doping produced in the recording layer varies in correspondence to the lightness/darkness of the interference pattern produced by interference between the signal beam and reference beam, while the light transmittance also corresponds to the lightness/darkness of the interference pattern. According to this type of hologram recording, it is possible to perform multiplex recording in the same volume by varying the angle of the reference beam, thereby allowing high-capacity recording of information.

The optical recording medium of the invention also allows multilayer recording. In this case, the focus position of the recording light is varied in the direction of depth of the recording layer and recording is accomplished by diffusing the metal particles in the chalcogenide glass at different depth positions.

For hologram recording and multilayer recording as described above, the wavelength of the irradiated recording light (the signal beam and reference beam in the case of hologram recording) is preferably a slightly shorter wavelength than the short wavelength end of the transmitting region. Specifically, it is preferably a wavelength of at least 0.7X and less than 1.0X, where X is the wavelength of the short wavelength end of the transmitting region.

The reproduction light may be light of the same wavelength as the recording light, irradiated at sufficiently low power with respect to the recording light, but the wavelength of the reproduction light is most preferably a light wavelength in the transmitting region of the chalcogenide glass (a wavelength of 1.0X or greater). Using the wavelength in the transmitting region of the chalcogenide glass will prevent reproduction-induced light doping even with high-power reproduction light, thereby avoiding reproduction deterioration whereby recorded information is corrupted by reproduction.

EXAMPLES

The present invention will now be explained in greater detail through the following examples, with the understanding that these examples are in no way limitative on the invention.

[Fabrication of optical recording medium samples]

(Example 1)

Ge-S based glass as chalcogenide glass and Ag as a metal for formation of metal particles were simultaneously or alternately vapor deposited onto a glass substrate, forming a recording layer comprising Ag particle-dispersed Ge-S chalcogenide glass, to obtain an optical recording medium sample for Example 1 (sample thickness: 1.2 $\mu$m) . A GeS$_2$ ingot was used as the chalcogenide glass vapor deposition source and an Ag ingot was used as the Ag vapor deposition source, and vapor deposition was performed while controlling the volume density of Ag particles to 1.5 vol%.

When the formed chalcogenide glass layer was observed with a transmission electron microscope (TEM), the Ag particle size was an average of about 10 nm and no particles exceeding 20 nm were found. Crystallite size calculation from the X-ray diffraction spectrum confirmed a particle size of 9 nm.

(Example 2)

An optical recording medium sample for Example 2 (sample thickness: 1.2 $\mu$m) was obtained in the same manner as Example 1 except that the vapor deposition was controlled for an Ag fine particle volume density of 0.5 vol%. TEM observation confirmed an Ag fine particle size of less than 10 nm, and a value of 3 nm was calculated from the X-ray diffraction spectrum.

(Reference Example 1)

GeS-based glass was vacuum deposited onto a glass substrate, forming a 600 nm chalcogenide glass layer, to obtain an optical recording medium sample for Reference Example 1.

[Measurement of transmittance by irradiation of laser light]

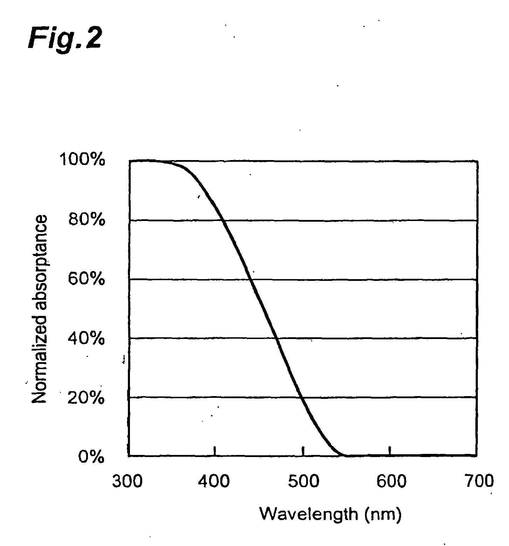

First, the optical recording medium sample of Reference Example 1 was irradiated with light varied between wavelengths of 300-700 nm, and the light absorptance of the chalcogenide glass layer at each wavelength was measured with a spectrophotometer. Fig. 2 is a graph showing the change in normalized absorptance with respect to the change in wavelength of irradiated light, for the optical recording medium sample of Reference Example 1. Here, the normalized absorptance of light is the absorptance without the influence of light interference, and it may be calculated by the following formula (1):

$$\text{Normalized absorptance} = \text{measured absorptance}/(\text{measured absorptance} + \text{measured transmittance}) \ldots (1)$$

Fig. 2 shows that the Ge-S chalcogenide glass did not transmit light with a wavelength of 350 nm and below, and that no absorption of light with a wavelength exceeding 550 nm was exhibited. The short wavelength end of the transmitting region in this case was therefore 550 nm.

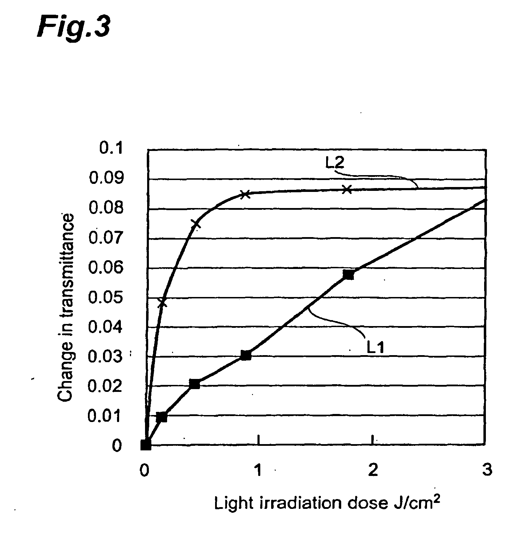

The optical recording medium samples of Examples 1 and 2 were then irradiated from the recording layer side using laser light with a wavelength of 532 nm as light having a wavelength near the short wavelength end of the transmitting region (light with a wavelength satisfying the condition of at least 0.7X and less than 1.0X, where X is the shortest wavelength of 550 nm), while varying the radiation dose of laser light between 0-3 J/cm$^2$, and the transmittance of the irradiated light was measured with a spectrophotometer. Fig. 3 is a graph showing the change in light transmittance with respect to change in light irradiation dose, for the optical recording medium samples of Examples 1 and 2. In Fig. 3, L1 represents the relationship between light irradiation dose and change in transmittance for the optical recording medium sample of Example 1, and L2 represents the same for the optical recording medium sample of Example 2.

As a comparative example, an optical recording medium sample obtained in the same manner as Example 1 was irradiated with a He-Ne laser having a wavelength of 633 nm, which was completely transmitted through the chalcogenide glass, at an irradiation dose of 5 J/cm$^2$. The results confirmed that no light doping was produced in the optical recording medium sample of Example 1.

Fig. 3 confirmed that both of the optical recording media of Examples 1 and 2 produced light doping upon light irradiation, and that the light doping produced a change in light transmittance corresponding to the change in the light irradiation dose. Since the irradiated light was light having a wavelength near the short wavelength end of the transmitting region of the chalcogenide glass (light with a wavelength satisfying the condition of at least 0.7X and less than 1.0X, where X is the shortest wavelength of 550 nm), it was sufficiently transmitted through the chalcogenide glass, and light doping similar to that on the light-irradiated surface was produced even on the surface opposite the irradiation side (the surface of the recording layer opposite the substrate side).

In particular, light doping in the optical recording medium sample of Example 2 was essentially saturated at a light irradiation dose of 1 J/cm$^2$ and the change in transmittance with respect to light irradiation dose was large, demonstrating excellent recording sensitivity. In addition, the light absorptance was as low as 16% upon the saturation, confirming that transmission of light is possible even with an increased thickness of the recording material, and therefore that multiplex recording is possible in the depthwise direction.

Furthermore, since in the comparative example the light of a wavelength completely passing through the chalcogenide glass used for the recording layer did not induce a light doping phenomenon despite the high irradiation dose of 5 J/cm$^2$, it was demonstrated that using reproduction light which has a wavelength that is transmitted through the chalcogenide glass can avoid alteration of the recording layer even when reproduction is carried out with high-output light, and can thus reduce reproduction-induced corruption of data.

As explained above, the optical recording material and optical recording medium of the present invention can accomplish three-dimensional optical recording such as multilayer recording wherein multiple recordings are performed in the direction of depth and multiplex recording by hologram recording, so that high-capacity recording can be achieved.

Furthermore, the manufacturing method of an optical recording medium according to the invention allows easy fabrication of the aforementioned optical recording medium of the invention, and the optical recording method of the invention can accomplish optical recording at a high recording density.

In addition, according to the reproduction method of the invention the recording layer of the optical recording medium is irradiated with reproduction light with a wavelength above the short wavelength end of the transmitting region of the chalcogenide glass, and therefore reproduction-induced light doping is prevented even with high-power reproduction light, so as to avoid reproduction deterioration whereby recorded information is corrupted by reproduction.

## Claims

1.   An optical recording material which allows recording of information by irradiation of light, comprising at least chalcogenide glass, and
metal particles dispersed in said chalcogenide glass and made of a metal which is diffusible in said chalcogenide glass by irradiation of said light.

2.   An optical recording material according to claim 1,
wherein said metal is at least one metal selected from the group consisting of Ag, Au and Cu.

3.   An optical recording material according to claim 1 or 2,
wherein the particle size of said metal is no greater than 1/20 of the wavelength of said light.

4.   An optical recording material according to any one of claims 1 to 3,
wherein the content of said metal particles is at least 0.1 vol% and less than 2 vol% based on the total volume of said optical recording material.

5.   An optical recording material according to any one of claims 1 to 4,
wherein said chalcogenide glass contains Ge and S.

6.   An optical recording medium comprising at least
a substrate material, and
a recording layer comprising an optical recording material according to any one of claims 1 to 5 formed on said substrate material.

7.   A method for manufacturing an optical recording medium which allows recording of information by irradiation of light comprising a step of simultaneously or alternately forming, on a substrate material, films of chalcogenide glass and of a metal which is diffusible in said chalcogenide glass by irradiation of said light, to form on said substrate material a recording layer having metal particles made of said metal dispersed in said chalcogenide glass.

8. An optical recording medium fabricated by a method for manufacturing according to claim 7.

9. An optical recording method comprising a recording step wherein said metal is diffused in said chalcogenide glass by irradiating light on the recording layer of an optical recording medium according to claim 6 or 8.

10. An optical recording method according to claim 9,
wherein said light is light with a wavelength of at least 0.7X and less than 1.0X, where X is the wavelength of the short wavelength end of the transmitting region of said chalcogenide glass.

11. An optical recording method comprising a hologram recording step wherein said metal is diffused in said chalcogenide glass by irradiating recording light composed of a signal beam and a reference beam on the recording layer of an optical recording medium according to claim 6 or 8.

12. An optical recording method according to claim 11,
wherein said signal beam and reference beam are both light with a wavelength of at least 0.7X and less than 1.0X, where X is the wavelength of the short wavelength end of the transmitting region of said chalcogenide glass.

13. A reproduction method comprising a step of irradiating reproduction light with a wavelength above the short wavelength end of the transmitting region of said chalcogenide glass onto the recording layer of an optical recording medium which is obtainable by an optical recording method according to any one of claims 9 to 12.


**Patentansprüche**

1. Optisches Aufzeichnungsmaterial, welches das Aufzeichnen einer Information durch Bestrahlung mit Licht ermöglicht, umfassend wenigstens
Chalcogenidglas und
Metallteilchen, die in dem Chalcogenidglas dispergiert sind und aus einem Metall bestehen, welches durch Bestrahlung mit dem Licht in das Chalcogenidglas diffusionsfähig ist.

2. Optisches Aufzeichnungsmaterial nach Anspruch 1, wobei das Metall wenigstens ein Metall ist, gewählt aus der Gruppe bestehend aus Ag, Au und Cu.

3. Optisches Aufzeichnungsmaterial nach Anspruch 1 oder 2, wobei die Teilchengröße des Metalls nicht mehr als 1/20 der Wellenlänge des Lichts beträgt.

4. Optisches Aufzeichnungsmaterial nach einem der Ansprüche 1 bis 3, wobei der Anteil der Metallteilchen wenigstens 0,1 Vol.-% und weniger als 2 Vol.-% beträgt, bezogen auf das Gesamtvolumen des optischen Aufzeichnungsmaterials.

5. Optisches Aufzeichnungsmaterial nach einem der Ansprüche 1 bis 4, wobei das Chalcogenidglas Ge und S enthält.

6. Optisches Aufzeichnungsmedium umfassend wenigstens
ein Substratmaterial, und
eine Aufzeichnungsschicht umfassend ein optisches Aufzeichnungsmaterial gemäß einem der Ansprüche 1 bis 5, welche auf dem Substratmaterial gebildet ist.

7. Verfahren zur Herstellung eines optischen Aufzeichnungsmediums, welches das Aufzeichnen von Information durch Bestrahlung mit Licht ermöglicht, umfassend einen Schritt des gleichzeitigen oder abwechselnden Bildens, von Filmen aus Chalcogenidglas und aus einem Metall, welches durch Bestrahlung mit dem Licht in das Chalcogenid-Glas diffusionsfähig ist, auf einem Substratmaterial, um auf dem Substratmaterial eine Aufzeichnungsschicht zu ausbilden, welche aus dem Metall hergestellte Metallteilchen aufweist, die in dem Chalcogenidglas dispergiert sind.

8. Optisches Aufzeichnungsmedium hergestellt durch ein Verfahren zur Herstellung gemäß Anspruch 7.

**9.** Optisches Aufzeichnungsverfahren umfassend einen Aufzeichnungsschritt, wobei das Metall in das Chalcogenidglas diffundiert wird, indem Licht auf die Aufzeichnungsschicht eines optischen Aufzeichnungsmediums gemäß Anspruch 6 oder 8 gestrahlt wird.

**10.** Optisches Aufzeichnungsverfahren nach Anspruch 9, wobei das Licht Licht mit einer Wellenlänge von wenigstens 0,7X und weniger als 1,0X ist, wobei X die Wellenlänge des kurzen Wellenlängenendes des Durchlässigkeitsbereichs (transmittance region) des Chalcogenidglases ist.

**11.** Optisches Aufzeichnungsverfahren umfassend einen Hologrammaufzeichnungsschritt, wobei das Metall in das Chalcogenidglas diffundiert wird, indem Aufzeichnungslicht, welches aus einem Signalstrahl und einem Referenzstrahl besteht, auf die Aufzeichnungsschicht eines optischen Aufzeichnungsmediums gemäß Anspruch 6 oder 8 gestrahlt wird.

**12.** Optisches Aufzeichnungsverfahren nach Anspruch 11, wobei der Signalstrahl und der Referenzstrahl beide Licht mit einer Wellenlängen von wenigstens 0,7X und weniger als 1.0X sind, wobei X die Wellenlänge des kurzen Wellenlängenendes des Durchlässigkeitsbereichs des Chalcogenidglases sind.

**13.** Reproduktionsverfahren umfassend einen Schritt des Aufstrahlens von Reproduktionslicht mit einer Wellenlänge oberhalb des kurzen Wellenlängenendes des Durchlässigkeitsbereichs des Chalcogenidglases auf die Aufzeichnungsschicht eines optischen Aufzeichnungsmediums, welches durch ein optisches Aufzeichnungsverfahren gemäß einem der Ansprüche 9 bis 12 erhältlich ist.

**Revendications**

**1.** Matériau d'enregistrement optique permettant l'enregistrement d'informations par rayonnement de lumière, comprenant au moins
un verre de chalcogénure, et
des particules métalliques dispersées dans ledit verre de chalcogénure et constituées d'un métal pouvant diffuser dans ledit verre de chalcogénure par rayonnement de ladite lumière.

**2.** Matériau d'enregistrement optique selon la revendication 1, dans lequel ledit métal est au moins un métal sélectionné à partir du groupe constitué de Ag, Au et Cu.

**3.** Matériau d'enregistrement optique selon la revendication 1 ou 2,
dans lequel la taille de particules dudit métal n'est pas supérieure à 1/20 de la longueur d'onde de ladite lumière.

**4.** Matériau d'enregistrement optique selon l'une quelconque des revendications 1 à 3, dans lequel la teneur en dites particules métalliques est au moins 0,1 % en volume et inférieure à 2 % en volume par rapport au volume total dudit matériau d'enregistrement optique.

**5.** Matériau d'enregistrement optique selon l'une quelconque des revendications 1 à 4, dans lequel ledit verre de chalcogénure contient du Ge et S.

**6.** Support d'enregistrement optique comprenant au moins un matériau de substrat, et une couche d'enregistrement comprenant un matériau d'enregistrement optique selon l'une quelconque des revendications 1 à 5 formée sur ledit matériau de substrat.

**7.** Procédé de fabrication d'un support d'enregistrement optique permettant l'enregistrement d'informations par rayonnement de lumière, comprenant une étape consistant à former, simultanément ou en alternance, sur un matériau de substrat, des films de verre de chalcogénure et d'un métal pouvant diffuser dans ledit verre de chalcogénure par rayonnement de ladite lumière, afin de former, sur ledit matériau de substrat, une couche d'enregistrement comportant des particules métalliques constituées dudit métal dispersé dans ledit verre de chalcogénure.

**8.** Support d'enregistrement optique fabriqué par un procédé de fabrication selon la revendication 7.

**9.** Procédé d'enregistrement optique comprenant une étape d'enregistrement dans laquelle ledit métal est diffusé dans ledit verre de chalcogénure par rayonnement de lumière sur la couche d'enregistrement d'un support d'enregistrement optique selon la revendication 6 ou 8.

10. Procédé d'enregistrement optique selon la revendication 9, dans lequel ladite lumière est une lumière ayant une longueur d'onde d'au moins 0,7 X et inférieure à 1,0 X, où X est la longueur d'onde de l'extrémité de longueur d'onde courte de la région de transmission dudit verre de chalcogénure.

11. Procédé d'enregistrement optique comprenant une étape d'enregistrement d'hologramme dans laquelle ledit métal est diffusé dans ledit verre de chalcogénure par rayonnement de lumière d'enregistrement constitué d'un faisceau de signal et d'un faisceau de référence sur la couche d'enregistrement d'un support d'enregistrement optique selon la revendication 6 ou 8.

12. Procédé d'enregistrement optique selon la revendication 11, dans lequel ledit faisceau de signal et ledit faisceau de référence sont tous deux de la lumière présentant une longueur d'onde d'au moins 0,7 X et inférieure à 1,0 X, où X est la longueur d'onde de l'extrémité de longueur d'onde courte de la région de transmission dudit verre de chalcogénure.

13. Procédé de reproduction comprenant une étape de rayonnement de lumière de reproduction, présentant une longueur d'onde supérieure à l'extrémité de longueur d'onde courte de la région de transmission dudit verre de chalcogénure, sur la couche d'enregistrement d'un support d'enregistrement optique pouvant être obtenu par un procédé d'enregistrement optique conforme à l'une quelconque des revendications 9 à 12.

## Fig.1

# Fig.2

# Fig.3